# EUROPEAN PATENT SPECIFICATION

(11) **EP 0 764 454 B1**
(45) Date of publication and mention of the grant of the patent: **20.02.2002**
(21) Application number: 96500121.7
(22) Date of filing: 10.09.1996
(51) Int. Cl.: B01D 29/00, B01D 35/00, B01D 35/26, B01D 35/30, B01D 36/04

(54) **Filtration equipement for liquids**
Vorrichtung zum Filtrieren von Flüssigkeiten
Installation de filtration de liquide

(30) Priority: 19.09.1995 ES 9501851; 16.08.1996 ES 9601817
(43) Date of publication of application: 26.03.1997
(73) Proprietor: Hernandez Mayor, Domingo, 08203 Sabadell Barcelona (ES)
(72) Inventor: Hernandez Mayor, Domingo, 08203 Sabadell Barcelona (ES); Hernandez Perez, Juan, 08203 Sabadell Barcelona (ES)
(74) Representative: Morgades Manonelles, Juan Antonio

(56) References cited:
- EP-A- 0 295 149
- WO-A-90/05011
- AT-A- 289 146
- US-A- 3 635 343

## Description

The present invention relates to a FILTRATION EQUIPMENT FOR LIQUIDS which can be applied to any type of natural or artificial container, of any shape and nature, and for different liquids.

For the filtration of liquids containing different types of material suspended therein, and within the large existing variety, it is attempted, with greater or lesser efficiency, by different means to obtain a flow on the surface which is as fast as possible and which entrains the floating impurities in order to transfer them to the filtering elements through suitable conduits while at the time that the entire volume is removed. In order to achieve this efficiently, it is necessary to be able to filter large volumes of flow in proportion to the volume of the container, which, on the other hand, in order to do so at low pressure requires also a very large filtering surface occupying an amount of space which is at times difficultly available and is always very expensive.

By the present equipment, developed for use in "any type" of natural or artificial container of any shape and nature and for different liquids, this flow is easily obtained, as well as the logical recirculation of the entire volume contained, it being collected on the surface and returned at the bottom in calibrated manner in both operations, without complicated installations and within the container itself, at the same time as there is obtained a filtering surface which in many cases is larger than that the surface of the container itself, which makes it possible to filter large volumes of flow at low pressure without taking up more space on the outside thereof than is necessary for a simple recirculation pump.

The equipment of the invention comprises a receptacle containing the liquid to be filtered. Said receptacle comprises a partition provided therein dividing it into two compartments A and B. The upper edge of such partition is provided with a float attached thereto by means of a soft, thin, flexible strip. The receptacle is also provided with a U-shaped frame having three flexible perimetral bands the ends of which are in contact therewith to seal compartments A and B in the receptacle allowing the liquid to pass therebetween below said partition in a uniform and calibrated manner by means of a soft pad provided in the lower edge of said frame.

The equipment is also provided with filtering elements fitted on a horizontal support provided near the upper part of the face B of the partition. Said support rests on a vertical side in the partition by an upwardly flexed band extending all over the contact perimeter thereof. The filtering elements are provided with a head with grooves where lips are formed sensitive to the pressure in the equipment pump in such a way that they open as pump works allowing the water flow into the filtering elements and close as it is in an idle condition. The lips acting as a valve may have a substantially trapezoidal, oval or star shape or another suitable configuration.

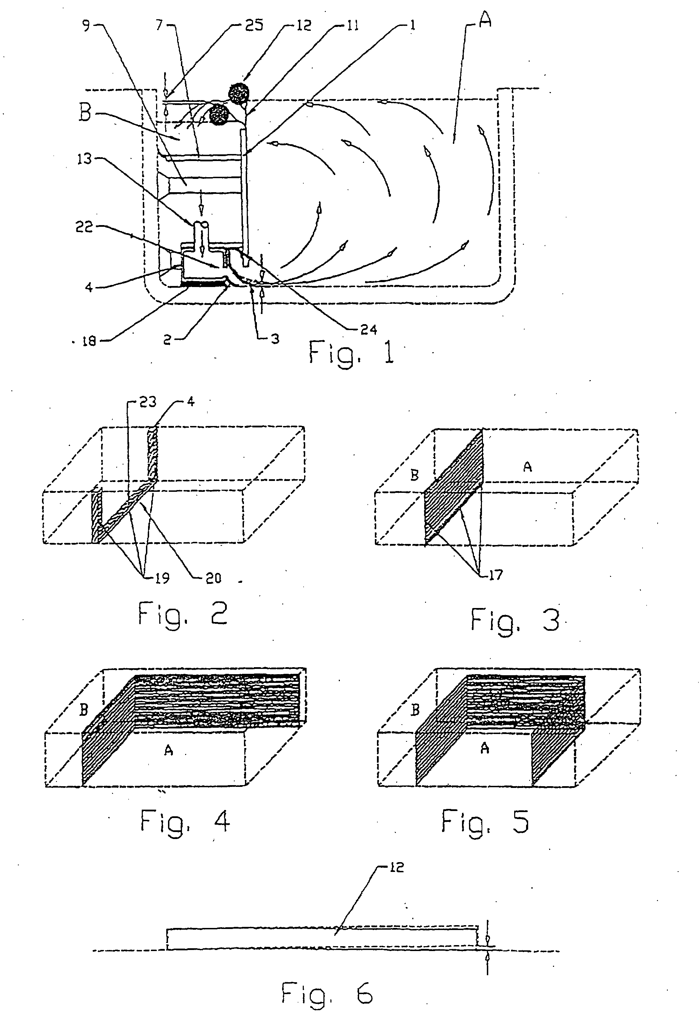

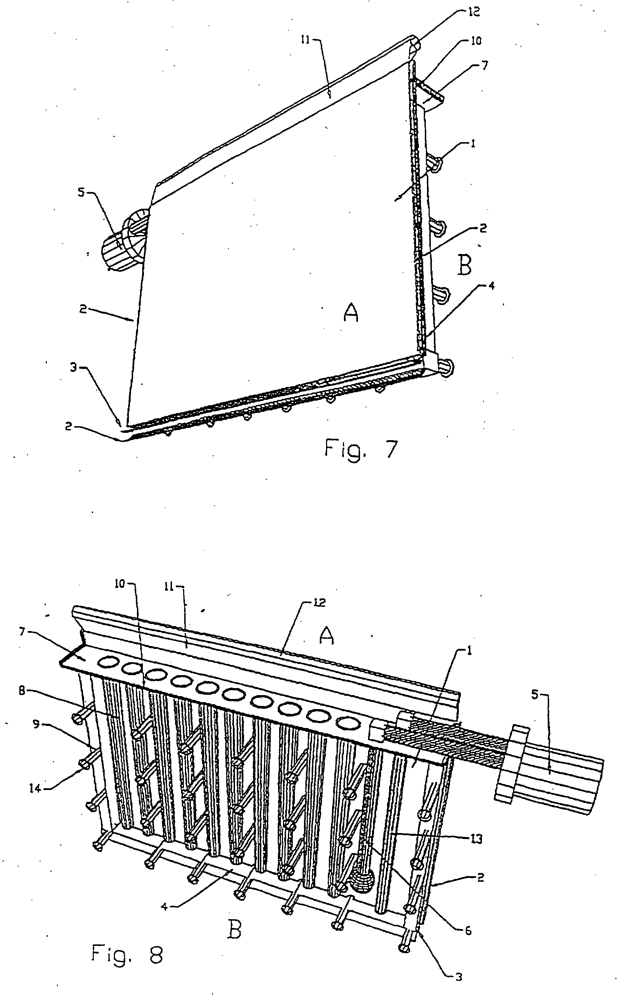

Fig. 1 shows an operating diagram; Figs. 2, 3, 4 and 5 show an example of the arrangement of the equipment and a few possible variants; Fig. 6 shows the characteristics of the float; Figs. 7 and 8 are a perspective view of the assembly.

The non-limitative embodiment proposed which is illustrated in the accompanying drawings consists of a flat partition (1) which, when introduced into the inside of the receptacle containing the liquid to be filtered, in vertical position from the bottom to the surface, extending parallel to one or more side thereof (Figs. 3, 4 and 5), resting on them by supports (9) perpendicular to the two facing surfaces, the free end of which is covered by a soft cap (14), in order to support the horizontal component of the differential pressure, divides its interior into two compartments A and B, its ends (17) coming against the sides of the container which are perpendicular to it.

A U-shaped frame (4) abutting against the face B of the partition (1) extending parallel to its three edges (17) which are in contact with the container, which rests on the walls and the bottom of the container, resting on a soft cushion (18) interposed between the two, has, on its surface facing the partition (1), the outer perimeter (19) extending in contact with the latter, a blade (3) bending obliquely to its perpendicular, which, resting against the walls and the bottom of the receptacle, seal the two compartments A and B from each other, utilizing the differential pressure exerted on it by the difference in levels created between the two during operation. At its lower edge (20) in contact with the bottom and superimposed on the first band, it has a second band (3) and in the space between the two there are conduits (22) which communicate with the compartment A, with the return channeling of the fluid which, in its turn, passes to the pump (5) which is located on the outside. On the inner perimetral face (23) of the frame (4) there is a third band (24) which flexes obliquely to its perpendicular which rests on the face B of the partition (1) sealing the two from each other if the said differential pressure acts on it. A support (7) from which there are suspended the filtering elements (8) best suited for the liquid to be filtered (bags of textile fabric, cartridges, conglomerates of fibers, calibrated disks, supports for diatomaceous earth, or any other known filtering element), placed in horizontal position, near the upper part of the partition (1) on its face B, perpendicular to it, between the latter and the side of the container which is parallel to it, resting on it by a band which is flexed upward placed over the entire perimeter of contact between the two, sealing this joint.

On the upper edge of the partition (1), attached to it by a thin flexible band (11), there is a float (12) of equal length and uniform density, protruding above the level of the liquid.

The assembly is completed by a recirculation pump (5) located on the outside of the container, the end of the intake pipe (6) of which is located near the bottom of the compartment B and its return (13) connected to the outlets (22).

### OPERATION

In state of rest, the levels in the two compartments are equalized through the return conduit (13) - pump (5') - intake (6), and the float (12) separates them when projecting upward. When the pump (5) is connected, it draws in the liquid from the bottom of the compartment B, and passes it through the filters (8) below the level in B forcing the float (12) to descend below the level in A and allowing the volume of liquid necessary in order to feed the pump (5) to pass above it, at the same time as it returns to A through the conduit (13) via the outlets (22), forcing the second flexible band (3) to lift only the amount necessary in order to permit the liquid to pass over its entire length uniformly and in calibrated manner below the partition (1), thereby creating a uniform drive force over the entire bottom of the container, which creates the inertia necessary to remove the volume of liquid from bottom to top while on the surface it slips toward the compartment B, sweeping it uniformly due to the metering effect of the float (12) which, being attached to its support by a flexible band (11), can oscillate freely (Fig. 6) in order to adapt itself to the level and therefore calibrate the size of the sheet of liquid which passes over it over its entire length.

As can be clearly seen, the embodiment described makes it possible to create the necessary flow on the surface in an efficient and simple manner, to filter high volumes of flow at low pressure due to the large filtering surface which it is possible to obtain by adding, if necessary, filtering elements until filling the entire perimeter of the container and also, due to the nature and low cost of these elements, it is possible to obtain different bits "micrajes" for each type of liquid and discard them after each use or, if desired, wash them for reuse.

With respect to the amount of the investment, since large outside pipelines or other annexes to the container itself are not necessary', it is very economical.

Having sufficiently described the nature of the invention as well as a manner of reducing it to practice, it should be pointed out that the arrangements described above are subject to modifications in detail, provided that they do not alter its fundamental principle, which is summarized and concretely set forth in the following claims.

## Claims

1. A filtration equipment for liquids comprising a receptacle for the liquid to be filtered, a partition (1) inside said receptacle dividing it into two compartments A and B, filtering elements being arranged in compartment B, an U-shaped frame (4) with three flexible perimetral bands in contact with the container and abutting against the partition (1), so that the two compartments A and B are sealed from each other, the upper edge of the partition being provided with a float (12) attached thereto by means of a soft, thin flexible strip (11), a flexible band (3) being provided at the bottom of the partition, wherein in operation liquid passes in a uniform and calibrated manner from compartment A over the bent flexible strip (11) in compartment B through the filtering elements and then below the partition (11) through the lifted flexible band (3) into the compartment A.

2. A filtration equipment for liquids as claimed in claim 1, **characterized in that** it comprises filtering elements (8) fitted on a horizontal support (7) provided near the upper part of the face B of the partition, said support resting on a vertical side in the partition by an upwardly flexed band extending all over the contact perimeter thereof.

3. A filtration equipment for liquids as claimed in claim 1, **characterized in that** the filtering elements are provided with a head with grooves where lips are formed sensitive to the pressure caused by a pump circulating the liquid.

4. A filtration equipment for liquids as claimed in claim 3, **characterized in that** said lips have a substantially trapezoidal shape.

5. A filtration equipment for liquids as claimed in claim 3, **characterized in that** said lips have a substantially oval shape.

6. A filtration equipment for liquids as claimed in claim 3, **characterized in that** said lips have a substantially star shape.

## Patentansprüche

1. Ein Filtergerät für Flüssigkeiten, bestehend aus einem Behältnis für die zu filternde Flüssigkeit, einer Trennwand (1) innerhalb des besagten Behältnisses, die es in zwei Kammern A und B teilt, Filterelementen, die in der Kammer B angeordnet sind, einem mit drei elastischen Einfassungsriemen versehenen u-förmigen Rahmen (4), der mit dem Behälter in Kontakt ist und an die Trennwand (1) anschließt, so dass die beiden Kammern A und B hermetisch voneinander abgetrennt sind; dabei ist die Oberkante der Trennwand mit einem Schwimmer (12) versehen, der an diese mittels eines weichen, dünnen Elastikbandes (11) und eines sich an der unteren Hälfte der Trennwand befindlichen elastischen Riemens (3), wodurch während des Filtervorgangs die Flüssigkeit gleichmäßig und kalibriert von der Kammer A über das gebogene Elastikband (11) in die Kammer B durch die Filterelemente und dann unterhalb der Trennwand (1) durch den angehobenen elastischen Riemen (3) in die Kammer A fließt.

2. Ein Filtergerät für Flüssigkeiten laut Patentanspruch 1, das **dadurch gekennzeichnet ist, dass** es Filterelemente (8) enthält, die auf einer horizontalen Auflage (7) befestigt sind, welche sich nahe der oberen Hälfte der Seite B der Trennwand befindet, wobei besagte Auflage auf einer vertikalen Seite in der Trennwand durch einen nach oben gebogenen Riemen gehalten wird, der sich über die gesamte Kontaktfläche der Trennwand erstreckt.

3. Ein Filtergerät für Flüssigkeiten laut Patentanspruch 1, das **dadurch gekennzeichnet ist, dass** die Filterelemente mit einem gerillten Kopfstück versehen sind, dessen Ränder so geformt sind, dass sie sensitiv auf den Druck reagieren, der von der Pumpe erzeugt wird, welche die Flüssigkeit zum Zirkulieren bringt.

4. Ein Filtergerät für Flüssigkeiten laut Patentanspruch 3, das **dadurch gekennzeichnet ist, dass** besagte Ränder im Wesentlichen trapezförmig gestaltet sind.

5. Ein Filtergerät für Flüssigkeiten laut Patentanspruch 3, das **dadurch gekennzeichnet ist, dass** besagte Ränder im Wesentlichen oval gestaltet sind.

6. Ein Filtergerät für Flüssigkeiten laut Patentanspruch 3, das **dadurch gekennzeichnet ist, dass** besagte Ränder im Wesentlichen sternförmig gestaltet sind.

## Revendications

1. Un équipement de filtrage de liquides qui comprend un récipient pour le liquide à filtrer, une cloison (1) à l'intérieur dudit récipient qui le divise en deux compartiments A et B, les éléments de filtrage étant disposés dans le compartiment B, un cadre en U (4), constitué de trois bandes flexibles, en contact avec le récipient et qui se rabat contre la cloison; ainsi les deux compartiments A et B sont séparés l'un de l'autre. La partie supérieure de la cloison (1) est munie d'un flotteur (12) qui y est attaché au moyen d'une bande, fine et flexible (11). Un ruban flexible (3) est fourni au fond de la cloison, où, au cours du fonctionnement, passe le liquide d'une manière uniforme et calibrée du compartiment A au compartiment B, au-dessus de la bande coudée flexible (11), à travers les éléments de filtrage, puis au-dessous de la cloison (11) à travers la bande ascendante flexible (3) dans le compartiment A.

2. Un équipement de filtrage pour liquides comme exigé dans la demande 1, **caractérisé par le fait qu'**il comprend des éléments de filtrage (8) placés sur un support horizontal (7) situé près de la partie supérieure de la face B de la cloison. Ledit support s'appuie sur un côté vertical de la cloison par une bande fléchie vers le haut qui s'étend sur tout le périmètre de contact.

3. Un équipement de filtrage pour liquides comme exigé dans la demande 1, **caractérisé par le fait que** les éléments de filtrage sont munis d'une tête avec des cannelures où les lèvres sont formées d'une manière sensible à la pression provoquée par une pompe par où circule le liquide.

4. Un équipement de filtrage pour liquides comme exigé dans la demande 3, **caractérisé par le fait que** lesdites lèvres ont une forme sensiblement trapézoïdale.

5. Un équipement de filtrage pour liquides comme exigé dans la demande 3, **caractérisé par le fait que** lesdites lèvres ont une forme sensiblement ovale.

6. Un équipement de filtrage pour liquides comme exigé dans la demande 3, **caractérisé par le fait que** lesdites lèvres ont une forme sensiblement en étoile.
